# EUROPEAN PATENT APPLICATION

(11) **EP 0 670 244 A1**
(43) Date of publication of application: **06.09.1995**
(21) Application number: 95101549.4
(22) Date of filing: 06.02.1995
(51) Int. Cl.: B60R 5/00

(54) **Luggage compartment for motor vehicles**

(30) Priority: 03.03.1994 IT TO940146
(71) Applicant: FIAT AUTO S.p.A., I-10135 Torino (IT)
(72) Inventor: Rana, Avtar Sinqh, I-10043 Orbassano (Torino) (IT); Vitale, Carlo, I-10042 Nichelino (Torino) (IT)
(74) Representative: Serra, Francesco

(57) **Abstract**

A luggage compartment (2) for a motor vehicle comprises at least one safety belt (6, 8), a reel (22) and respective retention member (28) for the buckle of the safety belt (6, 8). By disposing the belt (6, 8) above the article of luggage (4) and locking it in the retention member (28), the article of luggage (4) is held in position even if the vehicle is involved in an accident, ensuring the safety of the passengers in the rear seats of the vehicle.

## Description

The present invention relates to a luggage or baggage compartment for motor vehicles.

The main object of luggage compartments for motor vehicles is to accommodate the luggage (suitcases, bags, briefcases and packages in general) of the passengers of the motor vehicle.

One of the problems inherent in luggage compartments is the possibility, in the event of an accident, of the luggage breaking through the rear seat or seats, damaging the passenger compartment and seriously injuring the passengers in the motor vehicle.

Retention systems, such as elastic ropes, are known which, stretched over the luggage and hooked in slots or the like, enable the luggage to be retained.

Retention systems of the above type have to be hooked from time to time, have to be placed in the luggage compartment even if they are not required for use, otherwise they might be absent when they are needed, and can cause annoying noises but, above all, they do not retain the luggage in place in the event of an accident, resulting in the above dangers.

The object of the present invention is to provide a luggage compartment which has devices for retaining the luggage in the luggage compartment, holding it in position and preventing it from moving in the event of an accident, ensuring the safety of the passengers in the rear seats.

The present invention achieves the above object by means of a luggage compartment for motor vehicles having the characteristics mentioned specifically in the claims which follow.

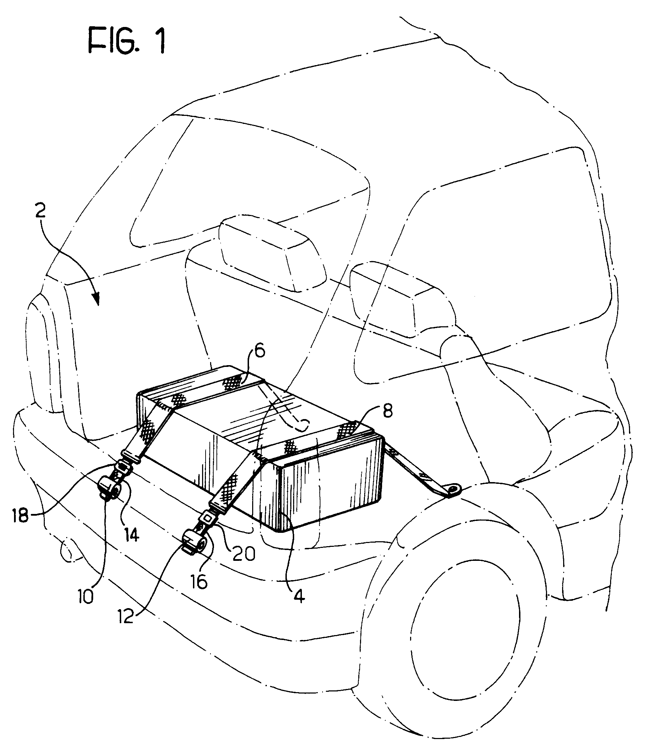

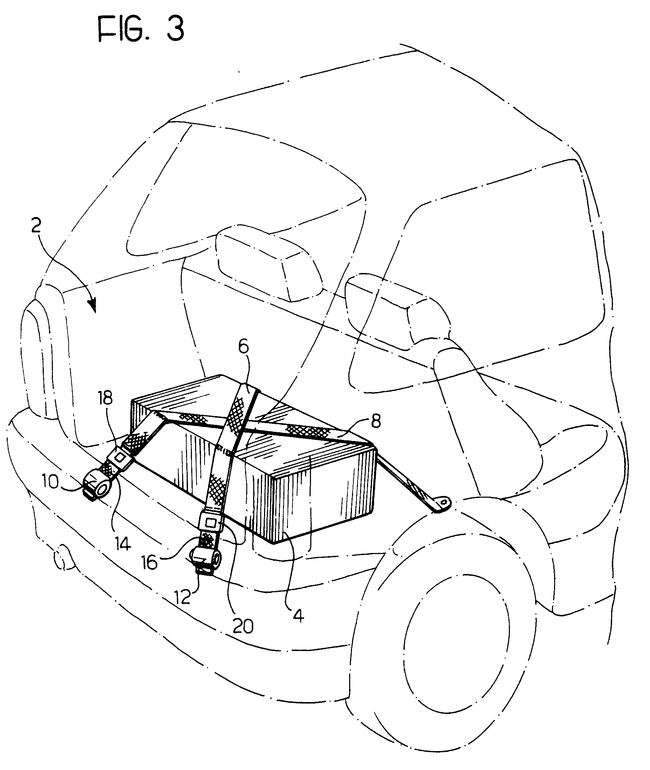

The invention will now be described purely by way of non-limiting example with reference to the appended drawings, in which Figures 1 to 6 show a luggage compartment according to the invention provided with devices for retaining the luggage in specific arrangements and configurations.

With reference to Figures 1 to 6, the luggage compartment of a motor vehicle is generally indicated 2, in which a piece of luggage 4, for example a suitcase, is disposed, by way of example.

In Figures 1 to 5, a pair 6, 8 of safety belts, of the type conventionally used for retaining passengers, is secured to the base of the luggage compartment by known means, typically bolts screwed into threaded seats.

Referring specifically to Figures 1, 2 and 3, a pair of reels 10 and 12 is secured in the zone of the luggage compartment towards the rear part of the vehicle, each reel 10 and 12 having a portion 14 and 16 of safety belt respectively secured to the conventional holder 18 and 20 respectively for the snap engagement of the conventional buckles integral with the safety belts 6 and 8, not shown in the Figures.

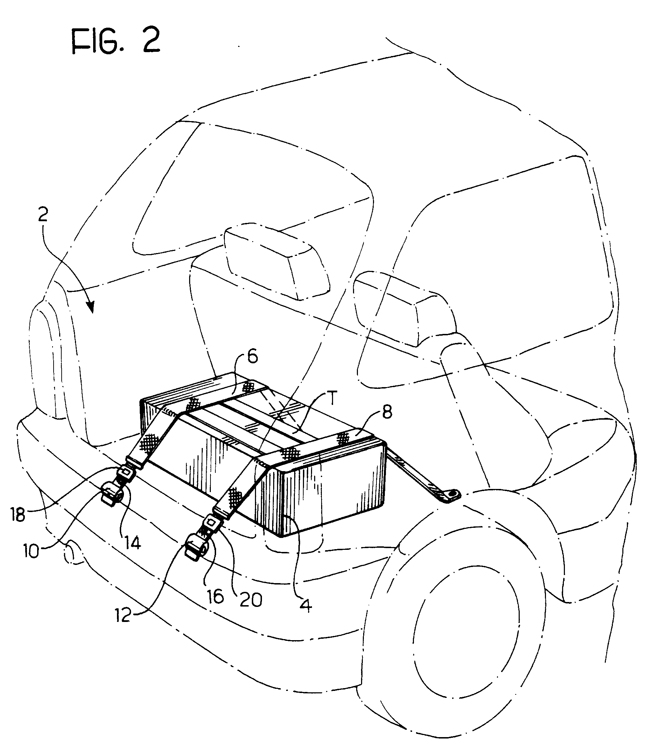

Figure 2 shows transverse retention elements T disposed between and secured to the belts 6 and 8.

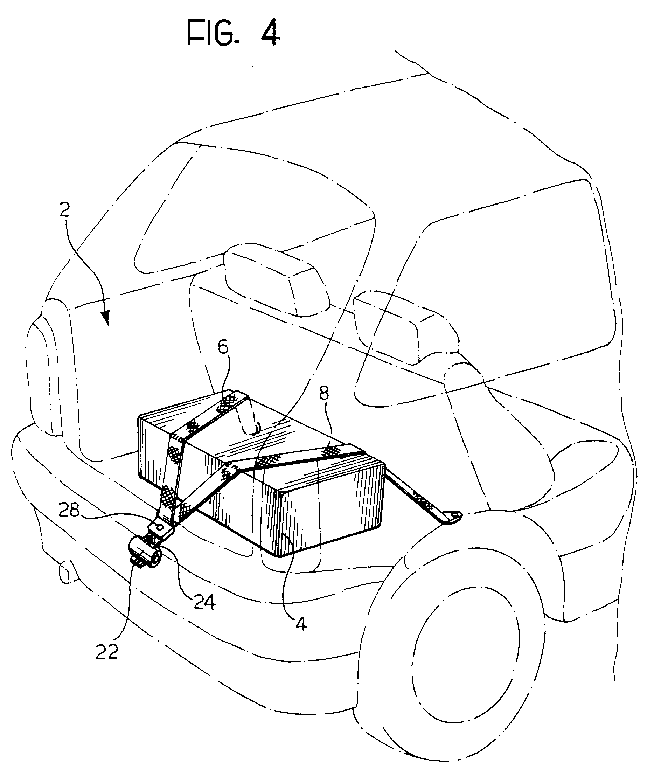

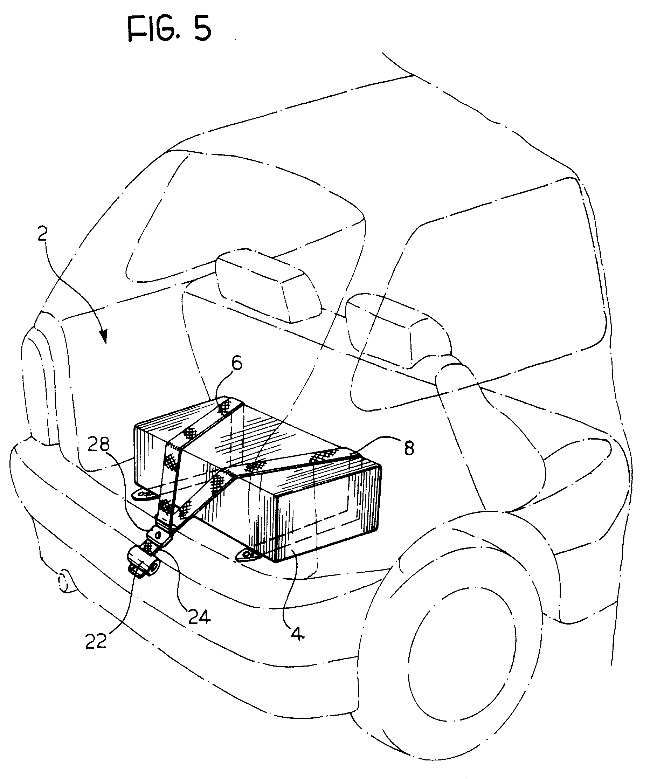

Referring specifically to Figures 4 and 5, a reel 22 is secured centrally to the area of the luggage compartment in which the fastening for the striker plate for the lock of the luggage compartment is provided.

The reel 22 has a portion 24 of safety belt securing the conventional holder 28 for the snap fastening of the single buckle, not shown in the drawings, integral with both safety belts 6, 8, secured respectively in Figure 4 in the area for securing the safety belts for the rear seats and in Figure 5 on the floor of the luggage compartment in an area close to the end wall of the luggage compartment itself of the part opposite the rear seat.

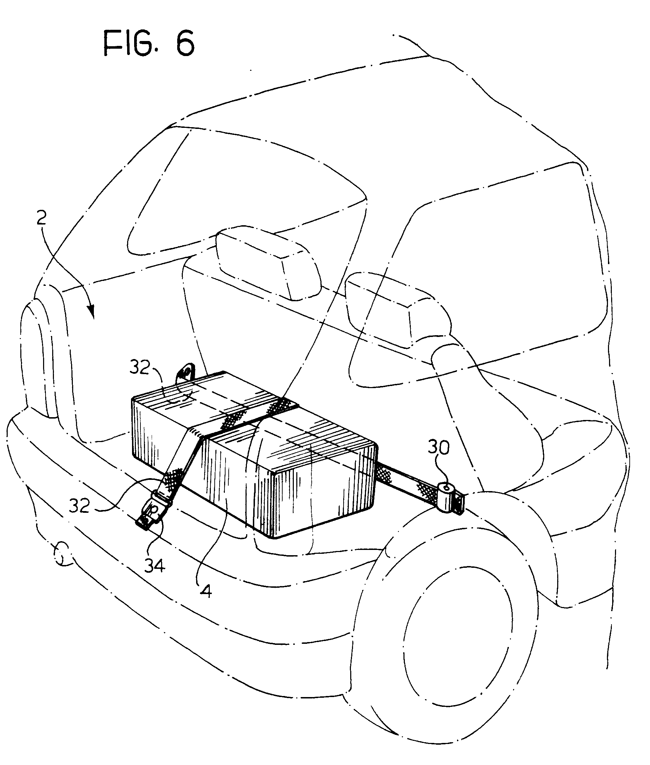

With reference to Figure 6, a reel 30, containing a safety belt 32, carrying the conventional buckle for fitting in a holder 34 which is secured in correspondence with the striker plate of the lock of the luggage compartment, is secured to an area of the luggage compartment 2 close to the anchoring area of one of the rear safety belts.

At its end opposite the reel, the safety belt 32 is secured to an area of the luggage compartment close to the anchoring area of the other rear safety belt, assuming a substantially transverse arrangement relative to the longitudinal direction of the motor vehicle.

In use, having to clamp the luggage 4 for safety, the user can dispose the safety belt or belts over the luggage 4 and lock the buckle or buckles with which the belt(s) is/are provided in the holder(s), the belt(s) being tensioned by means of the reel or reels, thus securing the luggage 4 stably in the luggage compartment 2.

The securing of the safety belt(s) and of the relative reels is to be brought about in areas of the luggage compartment which have been strengthened in order to withstand the traction force which is transmitted by the luggage 4 in the event of the vehicle being involved in an accident, or which are already sufficiently robust for their own structure.

The areas which are more suitable are those intended for the securing of the safety belts for the rear seats, the zone of the striker plate of the luggage compartment lock, or however, zones which are either sufficiently robust or suitably reinforced. In the case illustrated in Figures 1, 2 and 3 the zones intended for securing the reels will need to be reinforced and in the case illustrated in Figure 5 the zones for securing the auxiliary safety belts will need to be reinforced.

From the above, the practicality of a luggage compartment for motor vehicles provided with the luggage retaining devices as described above is clear.

The above retention devices are stably secured on board vehicles, and, the belt buckles being secured to the reel and the belt consequently being tensioned, there is no possibility of noises caused by the movement of the belts whilst the motor vehicle is travelling.

The use of devices (safety belt, reels and securing bolts) identical to those used for retaining motor vehicle passengers ensures the maximum degree of safety with respect to resistance to pulling.

The fact that the retention devices described above are secured in zones of the luggage compartment with a reinforced structure ensures that they are anchored stably and securely.

Naturally, the principle of the invention remaining the same, the details of production and forms of embodiment can be widely varied with respect to what has been described and illustrated without departing from the scope of the present invention. In particular, the number of safety belts and associated reels, their arrangement and their securing points can be widely varied; safety belts and reels can be secured to the luggage compartment, for example, by welding.

## Claims

1. Luggage compartment for motor vehicles, characterized in that it comprises:
- at least one first fastening point for securing at least one safety belt (6, 8, 32);
- at least one second fastening point for securing at least one reel (10, 12, 22, 30) for safety belts;
- at least one safety belt (6, 8, 32) provided with a buckle or a fastening hook which can be secured in the at least one first securing point;
- at least one reel (10, 12, 22, 30) which can be secured to the at least one second securing point; and
- at least one retention member (18, 20, 28, 34) which can cooperate with the buckle of the at least one safety belt (6, 8, 32).

2. A luggage compartment according to Claim 1, characterized in that it further comprises at least one third fastening point for securing the at least one retention member (18, 20, 28, 34) and which can cooperate with the buckle of the at least one safety belt (6, 8, 32).

3. A luggage compartment according to any one of the preceding claims, characterized in that the at least one first, second and third securing points are produced in reinforced zones of the luggage compartment.

4. A luggage compartment according to Claim 1, characterized in that the at least one retention member (18, 20, 28, 34) is integral with the at least one reel (10, 12, 22, 30).

5. A luggage compartment according to Claim 1 or Claim 4, characterized in that the at least one retention member (18, 20, 28, 34) is disposed in the zone of the bodywork intended for the striker plate of the lock of the luggage compartment door.

6. A luggage compartment according to Claim 3, characterized in that the at least one first securing point is positioned in correspondence with the zones of attachment of the safety belts for the rear seats of the motor vehicle to the body.

7. A luggage compartment according to Claim 3, characterized in that the at least one first and second securing points are positioned in correspondence with the zones of attachment of the safety belts for the rear seats of the motor vehicle to the body.

8. A luggage compartment according to Claim 3, characterized in that the at least one second securing point is positioned in the zone of the bodywork intended for the striker plate of the lock of the luggage compartment door.

9. A luggage compartment according to Claim 3, characterized in that the at least one second securing point is positioned on the rear cross-member of the motor vehicle.

10. A luggage compartment according to any one of Claims 1 to 9, characterized in that the at least one safety belt (6, 8, 32) and at least one reel (10, 12, 22, 30) are secured to the at least one first and second securing points respectively by a bolt coupling.

11. A luggage compartment according to any one of Claims 1 to 9, characterized in that the at least one safety belt (6, 8, 32) and the at least one reel (10, 12, 22, 30) are secured to the at least one first and second securing points respectively by welding.

12. A luggage compartment according to any one of Claims 1 to 11, characterized in that the at least one retention member (18, 20, 28, 34) is secured to the at least one third securing point by a bolt coupling.

13. A luggage compartment according to any one of Claims 1 to 11, characterized in that the at least one retention member (18, 20, 28, 34) is secured to the at least one third securing point by welding.
